# EUROPÄISCHE PATENTSCHRIFT

(11) **EP 1 211 277 B1**
(45) Veröffentlichungstag und Bekanntmachung des Hinweises auf die Patenterteilung: **06.10.2004**
(21) Anmeldenummer: 01127540.1
(22) Anmeldetag: 19.11.2001
(51) Int. Cl.: C08G 77/42, C08G 77/442, C08G 81/02

(54) **Siloxan-modifizierte Polyolefine und deren Verwendung als Additive für Polymerformulierungen**
Siloxane-modified polyolefins and their use as additives in Polymer compositions
Polyoléfines modifiées par des polyorganosiloxanes et leur utilisation comme additifs dans des compositions de polymères

(30) Priorität: 30.11.2000 DE 10059454
(43) Veröffentlichungstag der Anmeldung: 05.06.2002
(73) Patentinhaber: Goldschmidt AG, 45127 Essen (DE)
(72) Erfinder: Knebelkamp, Arno, Dr., 45468 Mülheim (DE); Scheiba, Manfred, 45138 Essen (DE); Stadtmüller, Stefan, Dr., 45309 Essen (DE)

(56) Entgegenhaltungen:
- EP-A- 0 581 150
- US-A- 5 641 835

## Beschreibung

Die Erfindung betrifft ein Verfahren zur Herstellung Siloxan-modifizierter Polyolefine, die so erhaltenen Polyolefine und deren Verwendung.

Der Einsatz von Kunststoffen ist in den letzten Jahren stetig angestiegen. In vielen technischen Anwendungen, beispielsweise im Automobilbereich, ersetzen sie dabei heutzutage andere Materialien wie Metalle oder natürlichen Kautschuk. Oberflächen von Polymermaterialien sind im täglichen Einsatz oft besonderen Anforderungen ausgesetzt. Bei Anwendungen im Außenbereich sind hier Einflüsse durch Witterung, Feuchtigkeit oder UV-Strahlung zu nennen. Aber auch besondere Beanspruchung der Oberfläche beispielsweise durch Einwirkung von mechanischen Kräften durch Reibung, Stöße, Schläge bedeuten einen erhöhten Verschleiß der hergestellten Formteile.

Es ist daher Stand der Technik, dass durch Zugabe von Additiven zu Kunststoffen, entweder bereits bei der Herstellung der Basispolymere oder bei Compoundierungsschritten, diesen Einflüssen entgegengewirkt werden kann.

Eine wesentliche Voraussetzung ist dabei, dass der Einsatz derartiger Zusatzstoffe zur Modifizierung der Kunststoffoberflächen die Festkörpereigenschaften der Polymerphase, wie etwa Elastizität, Festigkeit, Formbeständigkeit nicht negativ beeinflusst.

Das gleiche gilt für Arbeitsschritte, die sich an die Formgebung des Kunststoffteiles anschließen. Auch hier sollten keine Nachteile bei der Lackierbarkeit oder Bedruckbarkeit auftreten.

Die günstigen Oberflächeneigenschaften von Polydimethylsiloxanen finden in einer Reihe von Anwendungen Einsatz. Dabei macht man sich die niedrigen Kohäsionsenergien, die hohe Flexibilität und niedrige Oberflächenspannung dieser Verbindungsklasse zu Nutze.

### Silicon-Polycarbonat-Blockcopolymere

Ein Verfahren zur Herstellung von Polysiloxan-Polycarbonat-Blockkondensaten aus phenolischen Verbindungen und Di/oligoarylcarbonaten ist in mehreren Patentschriften aufgeführt, unter anderem die EP-A-0 864 599 und US-A-5 783 651. Durch chemische Kondensation von Hydroxyalkyl- oder arylgruppen am Siloxan werden Siloxanketten in Polycarbonatphasen eingeführt und dadurch die Materialeigenschaften, insbesondere die Tieftemperaturschlagzähigkeit verbessert. Diesen Patentschriften liegt das gemeinsame Konzept zugrunde, dass die Modifikation mit Siloxaneinheiten im Inneren der Polymermatrix stattfindet und damit die Morphologie des fertigen Kunststoffes durch Ausbildung einer zweiten Phase im Kristallgitter und damit Absenkung des Glaspunktes beeinflusst. Dies ist als Folge einer Unterbrechung der Polycarbonatketten bei dem Veresterungsschritt zu deuten, aus dem (AB)n Blockcopolymere resultieren. Bei diesen Anwendungen dient der Einsatz von Siloxanen der Modifizierung der Festkörpereigenschaften, die eine höhere Einsatzkonzentration > 5 % erfordert.

### Silicon-Polyimid-Blockcopolymere

In der US-A-4 395 527 wird die Verbesserung der Polymereigenschaften von Polyimiden durch Polysiloxane der folgende Formel beschrieben: 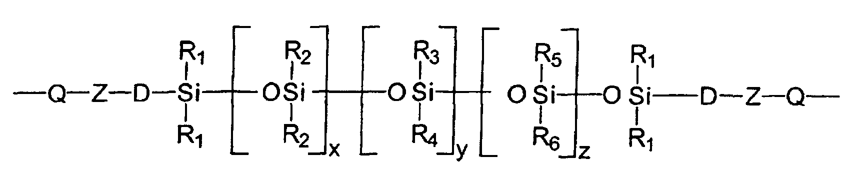 wobei Q eine substituierte oder unsubstituierte aromatische Gruppe ist,
Z -O-; -S-; -SO-; -SO₂-;-SO₂NH-; -NHSO₂-; -CONH-; -HNCO-; -COO- oder -OCO- ist;
D ein substituierter oder unsubstituierter Hydrocarbonrest;
R¹; R²; R³; R⁴; R⁵; R⁶ unabhängig voneinander nicht substituierte Hydrocarbonreste sind; und
x, y, z einen Wert zwischen 0 bis 100 haben.

Auch bei diesem Verfahren handelt es sich um die Ausbildung von (AB)ₙ Blockcopolymeren zwischen Siloxan und Polyimideinheiten zur Modifizierung der Festphasen.

### Siliconemasterbatche

Additive auf Siliconölbasis als Polymermasterbatche sind vielfach beschrieben und beispielsweise unter der Bezeichnung MB50 von Dow Corning erhältlich. Im Gegensatz zu den oben beschriebenen Beispielen handelt es sich bei der Siliconkomponente um ultrahochmolekulare, nichtfunktionelle Siliconöle mit Molekulargewichten von 40.000 bis 400.00, die in einem Polymerträger verarbeitet sind. In der empfohlenen Einsatzkonzentration von bis zu 2 % verbessern diese Additive als inneres und äußeres Gleitmittel die Prozesseigenschaften des Polymers bei der Verarbeitung. Da diese Additive aufgrund von Unverträglichkeiten mit dem Basispolymer bei dem Einarbeitungsvorgang an die Oberfläche migrieren, fördern sie zudem die Oberflächenbeständigkeit. Bei dieser Produktklasse handelt es sich dabei um ein Polymerblend und nicht um eine chemische Verknüpfung von Siloxan und Basispolymer. Eine permanente chemische Bindung des Siloxans an die Polymermatrix ist daher nicht gewährleistet. Die Rückhaltung des Siloxans im Polymer ist durch die hohe Molekularmasse und die damit verbundene gehemmte Mobilität bedingt.

EP-A-0 581 150 betrifft ein Trennmittel, welches durch Umsetzen eines organischen Polysiloxans, welches wenigstens eine Hydroxylgruppe oder wenigstens eine Epoxygruppe aufweist, mit einem ethylenisch ungesättigten, mit einer Dicarbonsäure aufgepfropften Polyolefin oder Olefincopolymer oder mit einem Reaktionsprodukt des gepfropften Polyolefins oder Olefincopolymeren und einer Verbindung, welche ein aktives Wasserstoffatom enthält, wobei es sich um einen Alkohol, ein Amin und/oder einen Aminoalkohol handelt, erhalten wird, wobei das Trennmittel 0,1 bis 5 Gew.-% Silizium im Molekül enthält. Im Ausführungsbeispiel 1 wird die Veresterung von maleiniertem Polypropylen mit einem Hydroxygruppen enthaltenden Polysiloxan in Xylol als Lösungsmittel beschrieben.

Demgegenüber besteht die Aufgabe der vorliegenden Erfindung in einem vereinfachten, verbesserten Verfahren zur Herstellung der Siloxan-modifizierten Polyolefine, die durch das Weglassen der Lösungsmittel neuen Anwendungszwecken zugänglich sind.

Gegenstand der Erfindung ist in einer ersten Ausführungsform ein Verfahren zur Herstellung von Siloxan-modifizierten Polyolefinen, die Bausteine
i), ii) und iii) enthalten, wobei
i) ein zweiwertiger Kohlenwasserstoffrest ist, der sich aus einzelnen Bausteinen
   -D-
   zusammensetzt,
   D zwischen 2 und 6 Kohlenstoffatome besitzt,
   D ausgewählt ist aus der Gruppe bestehend aus Ethylen, Propylen, Isopropylen, Butylen und/oder Isobutylen, wobei die Molekularmasse von i) im Bereich von 10.000 bis 500.000 d liegt;
ii) ein Rest der allgemeinen Formel I ist 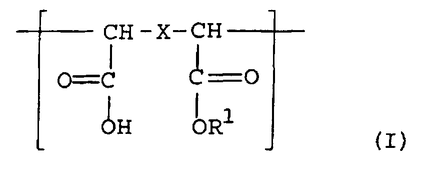 wobei X ein zweiwertiger, cyclischer oder acyclischer Kohlenwasserstoffrest mit 1 bis 30 Kohlenstoffatomen oder eine Einfachbindung ist,
   und R¹ einem Rest der Unterstruktur iii) entspricht,
iii) aus einem linearen organisch modifizierten Siloxanrest der allgemeinen Formel II 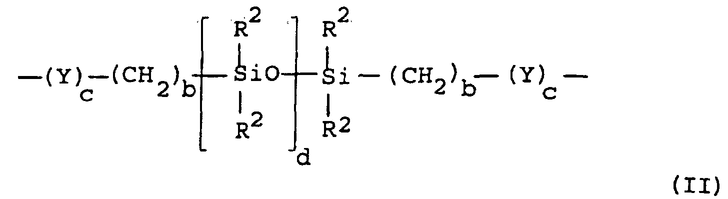 besteht,
   wobei die Indices einen Wert für
   - b =: 2 bis 20;
   - c =: 1 bis 50;
   - d =: 5 bis 1000 umfassen,
   - R² =: ein zweiwertiger C₁-C₁₂ Kohlenwasserstoffrest ist,
   - Y: = [OC(O)-(CH₂)ₐ]ₙO Zₘ ist, wobei
   a = 2 bis 15
   Z = Wasserstoff, ein einwertiger Kohlenwasserstoffrest oder ein Acetylrest mit jeweils 1 bis 10 C-Atomen,
   n = 1 bis 4 sind,
   oder
   - Y =: ein Polyetherrest der allgemeinen Formel

   - [O(C₂H₄₋ₑR³ ₑO)_{f}(C_{g}H_{2g}O)ₕ]ₙZₘ
   mit der Bedeutung
   - R³ =: einwertiger Kohlenwasserstoffrest mit 1-6 C-Atomen bzw. Phenyl,
   - e =: 0 bis 3,
   - f =: 1 bis 20,
   - g =: 2 bis 4,
   - h =: 1 bis 20 ist,
   und
   - m =: 0 oder 1 ist,
das dadurch gekennzeichnet ist, dass man ein Anhydridgruppen enthaltendes Polyolefin in der Schmelze mit einem hydroxyfunktionellen, linearen, organisch modifizierten Siloxan umsetzt.

Gegenstand der vorliegenden Erfindung ist weiterhin die Darstellung von Siloxan-modifizierten Polyolefinen, die dadurch gekennzeichnet sind, dass an einen Polyolefinrücken ein oder mehrere Organopolysiloxane über Esterbindungen geknüpft sind.

Siloxan-modifizierte Polyolefine im Sinne der vorliegenden Erfindung sind durch Umsetzung von Säureanhydrid-gepfropften Polyolefinen mit hydroxyfunktionellen Polysiloxanen in der Schmelze oder aus einem Lösemittel erhältlich. Durch die Kondensation zwischen Hydroxyl- und Anhydridgruppen erfolgt eine dauerhafte chemische Bindung der Siloxanketten an die Polymermatrix.

Erfindungsgemäße Verbindungen werden beispielsweise im geschmolzenen Zustand unter Rühren im Reaktor oder unter Einwirkung von Scherkräften unter anderem bei Einarbeitung auf dem Extruder in das Polymer eingebracht. Erfindungsgemäße Verbindungen zeichnen sich dadurch aus, dass sie während der Verarbeitung und vor dem Aushärten des Polymers bevorzugt an die Oberfläche migrieren und dort ihre Eigenschaften entfalten können. Aufgrund der Anteile an Polymer in den erfindungsgemäßen Verbindungen kommt es aber nach Erreichen der Oberfläche zu keinem Delaminations- oder Separationsverhalten, da diese die Verbindung hinreichend fest und permanent an das Polymer binden.

Erfindungsgemäße Verbindungen sind durch Reaktion von Anhydrid-modifizierten Polymeren mit hydroxyfunktionellen Siloxanen durch Veresterung an der Anhydrideinheit erhältlich. Die entstehenden Verbindungen enthalten daher noch freie Säureeinheiten.

Ferner ist die Verwendung von Siloxan-modifizierten Polymeren als Additive für Polymere zur Verbesserung der Oberflächenkratzfestigkeit, Abriebresistenz, Witterungsbeständigkeit und Hydrophobierung Gegenstand der vorliegenden Erfindung.

Ebenfalls Gegenstand der vorliegenden Erfindung ist die Verwendung Siloxan-modifizierter Polyolefine als Prozessadditive bei der Herstellung von Polymerformulierungen.

Die Erfindung betrifft in einer bevorzugten Ausführungsform Siloxan-modifizierte Polyolefine, die nach den obigen Verfahren erhältlich sind.

Die Darstellung der allgemeinen Formel für die erfindungsgemäßen Verbindungen ist selbstverständlich eine idealisierte Darstellung. Die tatsächliche Zusammensetzung einzelner Moleküle unterliegt statistischen Gegebenheiten.

Für die erfindungsgemäßen Verbindungen liegen die Gewichtsanteile der Bestandteile [i) + iii)] : ii) im Bereich von 95 : 5 bis 5 : 95. Ausgangspunkt für erfindungsgemäße Verbindungen sind Maleinsäureanhydrid-gepfropfte Polyolefine mit Gewichtsanteilen von Säureanhydrid bezogen auf das Gesamtmolekül im Bereich von 0,01 - 10 %, insbesondere 0,15 bis 10 %.

Ausgangspunkt für den Siloxananteil der erfindungsgemäßen Verbindungen sind Polyester-modifizierte Siloxane, beispielsweise α,ω-Dihydroxypolyestersiloxane der allgemeinen Struktur (1) 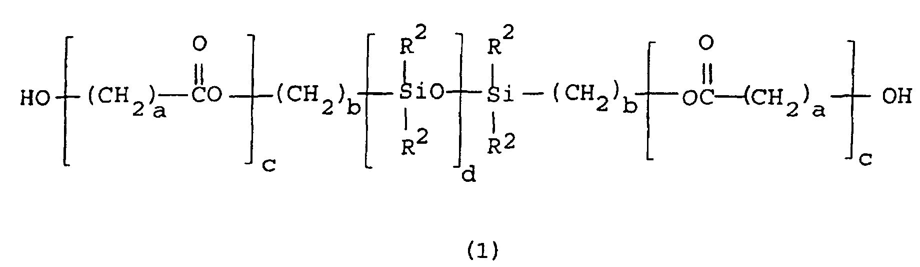 die unter dem Namen Tegomer® H-Si6440P oder H-Si6720 bei der Fa. Goldschmidt AG kommerziell erhältlich sind. Die Darstellung derartiger Verbindungen ist in der Literatur, beispielsweise Tenside Surf. Det. 30, (1993), 3, beschrieben.

Bei der Darstellung der Ausgangsverbindungen α,ω-Dihydroxypolyestersiloxane ist es von Bedeutung für die Kompatibilität und die Reaktivität mit dem Polyolefin, dass der Anteil von Polyester und Polysiloxankette in einem ausgewogenen Verhältnis steht. Beste Resultate wurden erzielt für Verbindungen mit den Maßgaben a = 3 bis 5; b = 3 bis 6; c = 5 bis 20 und insbesondere d = 20 bis 100.

Weiterer Gegenstand der Erfindung ist der Einsatz von Siloxan-modifizierten Polysiloxanen unabhängig von dem Herstellungsverfahren als Additiv für Polymerpräparationen zur Verbesserung der Oberflächeneigenschaften, wie Hydrophobierung und Witterungsbeständigkeit, Kratzfestigkeit und Abriebswiderstand. Typische Einsatzkonzentration, bei denen Vorteile der modifizierten Polyolefine offensichtlich werden, sind im Bereich von 0,1 bis 10 %, insbesondere 0,3 bis 5 %; bevorzugt im Bereich von 0,5 bis 2,0 %.

Bevorzugte Beispiele von Siloxan-modifizierten Polyolefinen:

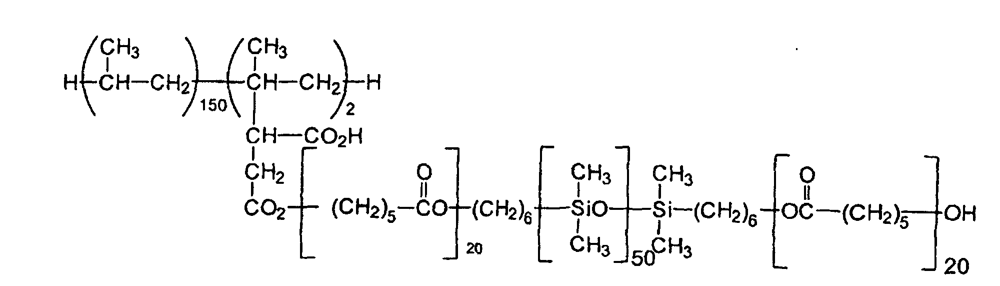

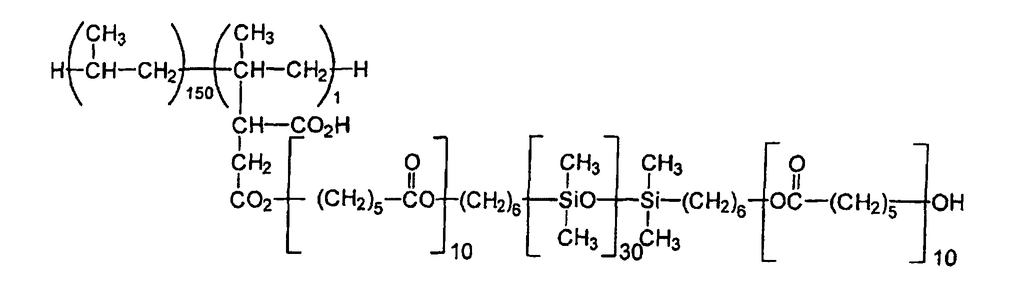

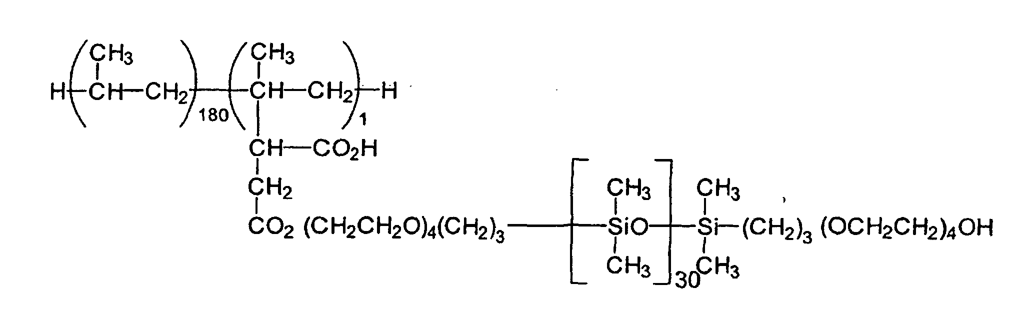

### Ausführungsbeispiele:

Die Siloxan-modifizierten Polyolefine sind durch Umsetzung von Anhydrid-modifizierten Polyolefinen mit organisch funktionellen Polysiloxanen durch Veresterungsreaktion erhältlich.

Geeignete Ausgangsmaterialien sind Maleinsäure-gepfropfte Polyolefine, insbesondere Polyethylene oder Propylene, wie sie beispielsweise unter dem Markennamen Polybond® (Polybond® 3000, 3200, 4000) der Firma Uniroyal Chemical kommerziell zugänglich sind.

Zur Einführung der Siloxanreste an dieses Polyolefingerüst eignen sich α,ω-Dihydroxysiloxane, beispielsweise α,ω-Dihydroxypolyestersiloxane der nachfolgenden allgemeinen Struktur, die unter dem Name Tegomer® H-Si6440P oder H-Si6720 bei der Goldschmidt AG, kommerziell erhältlich sind.

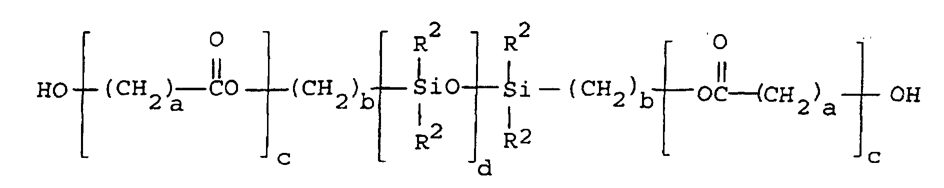

Die Indices haben die oben angegebene Bedeutung.

Die Herstellung durch Veresterung erfolgt in einer Stufe. Dabei kann diese Veresterungsreaktion diskontinuierlich beispielsweise in einer Rührapparatur, in einem Reaktor oder in einem Kneter durchgeführt werden. Vorteil dieser Reaktion ist es, dass sie ebenfalls in kontinuierlicher Fahrweise beispielsweise auf einem Extruder durchgeführt werden kann, ohne dass zu entsorgende Nebenprodukte anfallen. Erfindungsgemäß werden bei der Darstellung die Ausgangsmaterialien im geschmolzenen Zustand vorzugsweise bei Temperaturen von 80 - 280 °C, bevorzugterweise bei 150 - 220°C, zur Reaktion gebracht. Dabei kann die Reaktion entweder unter diskontinuierlicher Fahrweise bei Normaldruck oder bei kontinuierlicher Reaktionsführung unter Reaktionsdrücken von bis zu 80 bar durchgeführt werden. Normalerweise ist für die Reaktion der Zusatz eines Katalysators nicht erforderlich. Die Reaktionszeiten liegen zwischen einigen Minuten bis zu mehreren Stunden.

### Beispiel 1:

In einem Rührreaktor wurden 50 g Polybond® 3200 (ca. 1,5 % MSA; ca. 7000 Molekularmasse: der Fa. Uniroyal Chemical) und 66 g Tegomer® H-Si6720 aufgeschmolzen und unter heftiger Rührwirkung bei 180 °C 2 Stunden reagieren gelassen. Nach Abkühlung fiel das Produkt als pastöses Produkt an. Die FT-IR- Analyse des Produktes zeigte eine starke neue Esterbande, während die Anhydridbande gänzlich verschwunden ist.

### Beispiel 2:

In einem Rührreaktor wurden 50 g Polybond® 3200 und 50 g Tegomer® H-Si6440P aufgeschmolzen und unter heftiger Rührwirkung bei 180 °C 2 Stunden reagieren gelassen. Nach Abkühlung erhielt man ein festes Produkt.

### Beispiel 3:

In einem Rührreaktor wurden 67 g Polybond® 3200 und 31 g Tegomer® H-Si6440P aufgeschmolzen und unter heftiger Rührwirkung bei 180 °C 2 Stunden reagieren gelassen. Nach Abkühlung erhielt man ein festes Produkt.

### Beispiel 4:

In einem Rührreaktor wurden 50 g Polybond® 4000 und 92 g Tegomer® H-Si6440P aufgeschmolzen und unter heftiger Rührwirkung bei 180 °C 2 Stunden reagieren gelassen. Nach Abkühlung erhielt man ein festes Produkt.

### Beispiel 5:

Auf einem Doppelschneckenextruder Leistritz® Micro wurde Polybond® 4000 und Tegomer® H-Si6440P in Gewichtsanteilen von 2 : 1 zudosiert und mit 200 Ups; 3 bar; 180 °C bei einem Durchsatz von 12 kg/h verarbeitet. Der Produktstrang wurde im Wasserbad abgekühlt und granuliert. Nach Abkühlung erhielt man ein festes Granulat.

### Anwendungstechnische Beispiele

| Eingesetzte Materialien: | |
|---|---|
| Polypropylen | Stamylen® P14M10 DSM |
| Polyethylen | LLD-PE 1002 YB Escoren® |
| Calciumcarbonat | Millicarb® OG Omya |
| | |

| Eingesetztes Equipment: | |
|---|---|
| Extruder | 27/GL40D Co-rotierend; Leistritz AG |
| Spritzgussmaschine | ES200/50 HL; Engel |
| Pendelschlagwerk | 5102; 0,5 - 4 J |
| Schmelzflussbestimmung | Meltflixer LT |
| | |

| Ausprüfungen: | |
|---|---|
| Normprüfstab | DIN53455 |
| Schmelzflussindex (MFI) | DIN53735 |
| Schlagzähigkeit | IZOD180 |
| Kerbschlagzähigkeit (KSZ) | IZOD180 |

Zur Ermittlung des Fließweges wurde ein Spiralwerkzeug der Fa. Bayer verwandt.

Die Verbindungen gemäß den Beispielen 1 und 5 wurden zusammen mit Polyolefinen bzw. mit Polyolefin und Füllstoff auf einem Doppelschneckenextruder 27/GL40D verarbeitet. Die Formulierung wurde in einem Henschel Mischer vorgemischt und über den Haupteinzug auf den Extruder gegeben. Die Verarbeitungstemperaturen lagen bei 200 °C für Polypropylen und bei 210 °C für Polyethylen.

Die einzelnen Compounds unterschieden sich an ihrem Anteil an Additiv. Während der Extrusion wird die Stromaufnahme und der Druckaufbau im Extruder gemessen.

### Anwendungsbeispiel 1:

Die Zugabe der Verbindung gemäß Beispiel 5 zu Polypropylen bewirkte eine Verbesserung der Prozessparameter mit steigender Konzentration (B). Die Stromaufnahme (C) im Extruder wurde reduziert und der Druckaufbau (D) gesenkt. Das Schmelzflussverhalten (E) der Formulierung wurde ebenso verbessert, wie der Fließweg, ermittelt durch den Spiraltest. An gespritzten Normstäben wurde die Kerbschlagzähigkeit gemessen. Die Erhöhung der Werte mit steigender Konzentration deutet auf gesteigerte Festigkeit des Materiales.

| A | B | C | D | E | F | G |
|---|---|---|---|---|---|---|
| Compound 1 | Verbind. gemäß Beispiel 5 [phr]* | Strom [%] | Druck [bar] | MFI [g/10 min] | KSZ [kJ/m²] | Fließweg [cm] |
| 1 | 0 | 53 | 39 | 3 | 3,9 | 49 |
| 3 | 1,0 | 47 | 38 | 3,5 | 4,0 | 49 |
| 4 | 5,0 | 41 | 36 | 3,9 | 4,4 | 53 |
| 5 | 10,0 | 36 | 31 | 5,1 | 4,5 | 57 |

| | | | | | | |
|---|---|---|---|---|---|---|
| *Parts per hundred resin | | | | | | |

### Anwendungsbeispiel 2:

Die Zugabe der Verbindung gemäß Beispiel 5 zu Polypropylen (60 phr) gefüllt mit 40 Anteilen Kreide führte zu einer Absenkung der Stromaufnahme (C) und der Druckentwicklung (D) im Extruder. Die Kerbschlagzähigkeit wurde ebenfalls verbessert.

| A | B | C | D | F |
|---|---|---|---|---|
| Compound 2 | Verbind. gemäß Beispiel 5 [phr] | Strom [%] | Druck [bar] | KSZ [kJ/m²] |
| 1 | 0 | 44 | 39 | 2,8 |
| 2 | 0,5 phr | 42 | 39 | 2,8 |
| 3 | 1 phr | 40 | 38 | 3,0 |
| 5 | 5 phr | 38 | 37 | 3,3 |
| 6 | 10 phr | 36 | 36 | 3,5 |

### Anwendungsbeispiel 3:

Die Zugabe der Verbindung gemäß Beispiel 1 zu Polyethylen (100 phr) erniedrigte die Stromaufnahme (C) und senkte den Druck (D) im Extruder.

Das günstige rheologische Verhalten der Polymerschmelze äußerte sich in höheren Werten (E) und (G).

| A | B | C | D | E | G |
|---|---|---|---|---|---|
| Compound 3 | Verbind. gemäß Beispiel 5 [phr] | Strom [%] | Druck [bar] | MFI [g/10 min] | Fließweg [cm] |
| 1 | 0 | 62 | 53 | 4,4 | 37 |
| 2 | 0,5 phr | 55 | 55 | 3,5 | 37 |
| 3 | 1,0 phr | 54 | 52 | 3,5 | 37 |
| 5 | 5,0 phr | 43 | 46 | 3,9 | 40 |
| 6 | 10 phr | 38 | 41 | 5 | 47 |

### Anwendungsbeispiel 4:

Die Zugabe der Verbindung gemäß Beispiel 1 zu Polyethylen (60 phr) gefüllt mit 40 Teilen Kreide bewirkte günstigere Verarbeitungsparameter (C) und (D). Die Schlagzähigkeit gemessen an Normstäben wurde erhöht.

| A | B | C | D | F |
|---|---|---|---|---|
| Compound 4 | Verbind. gemäß Beispiel 5 [%] | Strom [%] | Druck [bar] | SZ [kJ/m²] |
| 1 | 0 | 55 | 61 | 41 |
| 8 | 0,5 phr | 55 | 61 | 44 |
| 9 | 1,0 phr | 52 | 62 | 46 |
| 11 | 5,0 phr | 40 | 52 | 52 |
| 12 | 10 phr | 35 | 44 | 52 |

## Patentansprüche

1. Verfahren zur Herstellung von Siloxan-modifizierten Polyolefinen, die Bausteine
i), ii) und iii) enthalten, wobei
i) ein zweiwertiger Kohlenwasserstoffrest ist, der sich aus einzelnen Bausteinen
-D-
zusammensetzt,
D zwischen 2 und 6 Kohlenstoffatome besitzt,
D ausgewählt ist aus der Gruppe bestehend aus Ethylen, Propylen, Isopropylen, Butylen und/oder Isobutylen, wobei die Molekularmasse von i) im Bereich von 10.000 bis 500.000 d liegt;
ii) ein Rest der allgemeinen Formel I ist 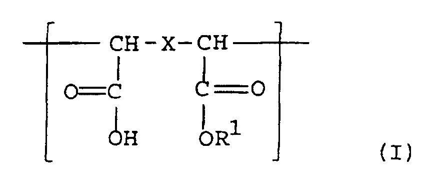 wobei X ein zweiwertiger, cyclischer oder acyclischer Kohlenwasserstoffrest mit 1 bis 30 Kohlenstoffatomen oder eine Einfachbindung ist,
und R¹ einem Rest der Unterstruktur iii) entspricht,
iii) aus einem linearen organisch modifiziertem Siloxanrest der allgemeinen Formel II 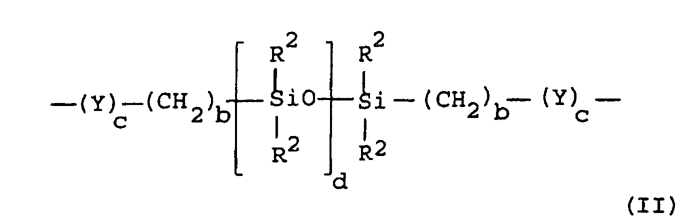 besteht,
wobei die Indices einen Wert für
b = 2 bis 20;
c = 1 bis 50;
d = 5 bis 1000 umfassen,
R² = ein zweiwertiger C₁-C₁₂ Kohlenwasserstoffrest ist,
Y = [OC(O) - (CH₂)ₐ]ₙO Zₘ ist, wobei
a = 2 bis 15
Z = Wasserstoff, ein einwertiger Kohlenwasserstoffrest oder ein Acetylrest mit jeweils 1 bis 10 C-Atomen,
n = 1 bis 4 sind,
oder
Y = ein Polyetherrest der allgemeinen Formel
- [O(C₂H₄₋ₑR³ ₑO)_{f}(C_{g}H_{2g}O)ₕ]ₙZₘ
mit der Bedeutung
R³ = einwertiger Kohlenwasserstoffrest mit 1-6 C-Atomen bzw. Phenyl,
e = 0 bis 3,
f = 1 bis 20,
g = 2 bis 4,
h= 1 bis 20 ist,
und
m = 0 oder 1 ist,
das **dadurch gekennzeichnet ist, dass** man ein Anhydridgruppen enthaltendes Polyolefin in der Schmelze mit einem hydroxyfunktionellen, linearen, organisch modifizierten Siloxan umsetzt.

2. Verfahren nach Anspruch 1, **dadurch gekennzeichnet, dass** man die Reaktion bei einer Temperatur im Bereich von 80 bis 280 °C, insbesondere 150 bis 220 °C durchführt.

3. Verfahren nach Anspruch 1 oder 2, **dadurch gekennzeichnet, dass** man die Reaktion in einem Rührreaktor, Extruder oder Kneter durchführt.

4. Verfahren nach einem der Ansprüche 1 bis 3, **dadurch gekennzeichnet, dass** man die Gewichtsanteile der Bestandteile [i) + ii)] : iii) im Bereich 95 : 5 bis 5 : 95 wählt.

5. Verfahren nach einem der Ansprüche 1 bis 4, **dadurch gekennzeichnet, dass** man die Gewichtsanteile der Bestandteile [i) + ii)] : iii) im Bereich 65 : 35 bis 35 : 65 wählt.

6. Verfahren nach einem der Ansprüche 1 bis 5, **dadurch gekennzeichnet, dass** die Unterstruktur iii) ein Polydialkylorganosiloxan ist, wobei in der allgemeinen Formel R² = Methyl ist.

7. Verfahren nach einem der Ansprüche 1 bis 6, **dadurch gekennzeichnet, dass** die Gewichtsanteile der Bestandteile ii) im Bereich von 0,01 bis 10 %, insbesondere 0,1 bis 10 % liegen.

8. Verfahren nach einem der Ansprüche 1 bis 7, **dadurch gekennzeichnet, dass** a) einen Wert 1 und 8; b) einen Wert zwischen 2 und 8; c) einen Wert zwischen 1 und 20 und d) insbesondere einen Wert zwischen 10 und 100 hat.

9. Siloxan-modifizierte Polyolefine erhältlich nach einem Verfahren gemäß einem der Ansprüche 1 bis 8.

10. Verwendung von Siloxan-modifizierten Polysiloxanen, gemäß Anspruch 9 als Additive zu Polymerformulierungen in einer Konzentration von 0,01 bis 20 Gew.-% zur Verbesserung der Oberflächeneigenschaften von polymeren Verbindungen, wie beispielsweise Hydrophobie, Kratzfestigkeit, Rauhigkeit, Witterungsbeständigkeit, Gleitfähigkeit und Abriebsbeständigkeit, insbesondere bei Einsatzkonzentrationen von 0,1 bis 10 Gew.-% der Verbindung bezogen auf das Polymer.

11. Verwendung nach Anspruch 10 als Prozesshilfsmittel zur Polymerformulierung in Konzentration von 0,01 bis 20 Gew.-% bei der Verarbeitung von Polymeren bei der Extrusion zur Senkung der Stromaufnahme und des Druckaufbaus der Extrudieranlage.

12. Verwendung nach Anspruch 11, **dadurch gekennzeichnet, dass** die Polymere ausgewählt sind aus Engineering-Polymeren, Thermoplasten, Elastomeren, Polyolefinen, insbesondere Acrylnitril-Butadien-Styrolen oder Polycarbonaten.

13. Verwendung nach Anspruch 10 als Prozesshilfsmittel bei der Herstellung von Polyolefinfolien, insbesondere Polyethylenfolien zur Unterdrückung von Schmelzbruchverhalten.

## Revendications

1. Procédé pour la préparation de polyoléfines modifiées par siloxane, qui contiennent des éléments i), ii) et iii) où
i) représente un radical hydrocarboné divalent, qui est constituée par différents éléments -D-,
D contenant entre 2 et 6 atomes de carbone
D étant choisi dans le groupe constitué par l'éthylène, le propylène, l'isopropylène, le butylène et/ou l'isobutylène, le poids moléculaire de i) se situant dans la plage de 10000 à 500000 ;
ii) représente un radical de formule générale I 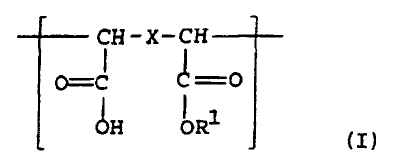 dans laquelle X représente un radical hydrocarboné divalent, cyclique ou acyclique comprenant 1 à 30 atomes de carbone ou une simple liaison et
R¹ correspond à un radical présentant la sous-structure iii),
iii) est constitué par un radical siloxane linéaire organiquement modifié de formule générale II 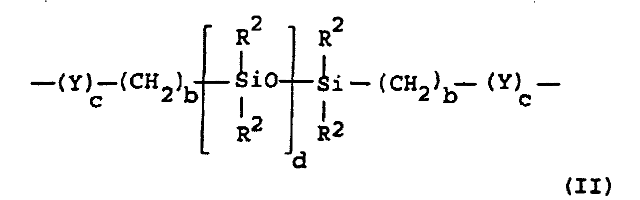 dans laquelle les indices valent
b = 2 à 20 ;
c = 1 à 50 ;
d = 5 à 1000,
R² représente un radical hydrocarboné divalent en C_{1 à C₁₂,}
Y = [OC(O)-(CH₂)ₐ]ₙO Zₘ, où
a = 2 à 15
Z = représente hydrogène, un radical hydrocarboné monovalent ou un radical acétyle comprenant à chaque fois 1 à 10 atomes de carbone, n = 1 à 4,
ou
Y = un radical polyéther de formule générale
- [O(C₂H₄₋ₑR³ ₑO)_{f}(C_{g}H_{2g}O)ₕ]ₙZₘ
avec comme signification
R³ = un radical hydrocarboné monovalent comprenant 1 à 6 atomes de carbone ou phényle,
e = 0 à 3,
f = 1 à 20,
g = 2 à 4,
h = 1 à 20, et
m = 0 ou 1,
qui est **caractérisé en ce qu'**on transforme une polyoléfine contenant des groupes anhydride en masse fondue avec un siloxane à fonctionnalité hydroxy, linéaire, organiquement modifié.

2. Procédé selon la revendication 1, **caractérisé en ce qu'**on effectue la réaction à une température dans la plage de 80 à 280°C, en particulier de 150 à 220°C.

3. Procédé selon la revendication 1 ou 2, **caractérisé en ce qu'**on effectue la réaction dans un réacteur agité, une extrudeuse ou un malaxeur.

4. Procédé selon l'une quelconque des revendications 1 à 3, **caractérisé en ce qu'**on choisit les proportions en poids des constituants [i) + ii)]:iii) dans la plage de 95:5 à 5:95.

5. Procédé selon l'une quelconque des revendications 1 à 4, **caractérisé en ce qu'**on choisit les proportions en poids des constituants [i) + ii)]:iii) dans la plage de 65:35 à 35:65.

6. Procédé selon l'une quelconque des revendications 1 à 5, **caractérisé en ce que** la sous-structure iii) est un polydialkylorganosiloxane, R² dans la formule générale représentant méthyle.

7. Procédé selon l'une quelconque des revendications 1 à 6, **caractérisé en ce que** les proportions en poids des constituants ii) se situent dans la plage de 0,01 à 10%, en particulier de 0,1 à 10%.

8. Procédé selon l'une quelconque des revendications 1 à 7, **caractérisé en ce que** a) présente une valeur entre 1 et 8, b) une valeur entre 2 et 8, c) une valeur entre 1 et 20 et d) en particulier une valeur entre 10 et 100.

9. Polyoléfines modifiées par siloxane, pouvant être obtenues selon un procédé selon l'une quelconque des revendications 1 à 8.

10. Utilisation des polysiloxanes modifiés par siloxane selon la revendication 9 comme additif dans des formulations de polymère en une concentration de 0,01 à 20% en poids pour améliorer les propriétés de surface de composés polymères, telles que par exemple l'hydrophobie, la résistance aux griffes, la rugosité, la résistance aux intempéries, l'aptitude au glissement et la résistance au frottement, en particulier en des concentrations d'utilisation de 0,1 à 10% en poids du composé par rapport au polymère.

11. Utilisation selon la revendication 10 comme adjuvant de procédé pour la formulation de polymères en une concentration de 0,01 à 20% en poids lors de la transformation de polymères lors de l'extrusion afin de diminuer la consommation de courant et la montée en pression d'une extrudeuse.

12. Utilisation selon la revendication 11, **caractérisée en ce que** les polymères sont choisis parmi les polymères industriels, les thermoplastiques, les élastomères, les polyoléfines, en particulier les acrylonitrile-butadiène-styrènes ou les polycarbonates.

13. Utilisation selon la revendication 10 comme adjuvant de procédé lors de la préparation de feuilles de polyoléfines, en particulier de feuilles de polyéthylène, pour supprimer le comportement de rupture de la masse fondue.

## Claims

1. A process for preparing siloxane-modified polyolefins which contain units
i), ii) and iii), where
i) is a divalent hydrocarbon radical composed of individual units
-D-,
D has from 2 to 6 carbon atoms,
D has been selected from the group consisting of ethylene, propylene, isopropylene, butylene and/or isobutylene, where the molecular weight of i) is in the range from 10 000 to 500 000;
ii) is a radical of the general formula I 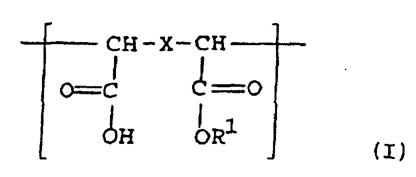 where X is a divalent, cyclic or acyclic hydrocarbon radical having from 1 to 30 carbon atoms or is a single bond,
and R¹ is a radical of the substructure iii),
iii) is composed of a linear organically modified siloxane radical of the general formula II 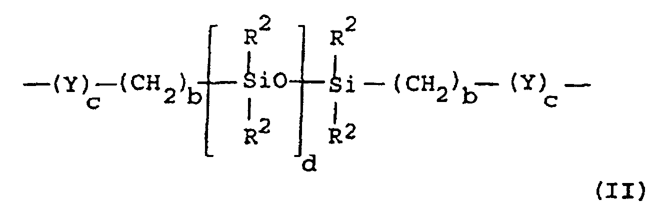
where the indices encompass a value
b = from 2 to 20;
c = from 1 to 50;
d = from 5 to 1000,
R²= a divalent C₁-C₁₂ hydrocarbon radical,
Y = [OC(O)-(CH₂)ₐ]ₙO Zₘ, where
a = from 2 to 15
Z = hydrogen, a monovalent hydrocarbon radical, or an acetyl radical, each having from 1 to 10 carbon atoms,
n = 1 to 4,
or
Y = a polyether radical of the general formula
- [O(C₂H₄₋ₑR³ ₑO)_{f}(C₉H_{2g}O)ₕ]ₙZₘ
where
R³= monovalent hydrocarbon radical having from 1 to 6 carbon atoms or phenyl,
e = from 0 to 3,
f = from 1 to 20,
g = from 2 to 4,
h = from 1 to 20,
and
m = 0 or 1,
**characterized in that** a polyolefin containing anhydride groups is reacted in the melt with a hydroxy-functional, linear, organically modified siloxane.

2. Process according to Claim 1, **characterized in that** the reaction is carried out at a temperature in the range from 80 to 280°C, in particular from 150 to 220°C.

3. Process according to Claim 1 or 2, **characterized in that** the reaction is carried out in a stirred reactor, extruder or kneader.

4. Process according to any of Claims 1 to 3, **characterized in that** the proportions by weight of the constituents [i) + ii)] : iii) are selected in the range from 95:5 to 5:95.

5. Process according to any of Claims 1 to 4, **characterized in that** the proportions by weight of the constituents [i) + ii)] : iii) are selected in the range from 65:35 to 35:65.

6. Process according to any of Claims 1 to 5, **characterized in that** the substructure iii) is a polydialkylorganosiloxane where R² = methyl in the general formula.

7. Process according to any of Claims 1 to 6, **characterized in that** the proportions by weight of the constituents ii) are in the range from 0.01 to 10%, in particular from 0.1 to 10%.

8. Process according to any of Claims 1 to 7, **characterized in that** a) has a value 1 and 8; b) has a value from 2 to 8; c) has a value from 1 to 20 and d) in particular has a value from 10 to 100.

9. Siloxane-modified polyolefins obtainable by a process according to any of Claims 1 to 8.

10. Use of siloxane-modified polyolefins according to Claim 9 as additives to polymer compositions at a concentration of from 0.01 to 20% by weight for improving the surface properties of polymeric compounds, e.g hydrophobic properties, scratch resistance, roughness, weathering resistance, slip and abrasion resistance, 'in particular using concentrations of from 0.1 to 10% by weight of the compound, based on the polymer.

11. Use according to Claim 10 as processing aid for the polymer composition at a concentration of from 0.01 to 20% by weight during the extrusion of polymers to lower the electrical power consumption and the pressure rise in the extruder system.

12. Use according to Claim 11, **characterized in that** the polymers have been selected from engineering polymers, thermoplastics, elastomers, polyolefins, in particular acrylonitrile-butadiene-styrenes or polycarbonates.

13. Use according to Claim 10 as processing aid in the production of polyolefin films, in particular polyethylene films for suppressing melt fracture.
